# EUROPÄISCHE PATENTSCHRIFT

(11) **EP 3 647 640 B1**
(45) Veröffentlichungstag und Bekanntmachung des Hinweises auf die Patenterteilung: **29.11.2023**
(21) Anmeldenummer: 19203032.8
(22) Anmeldetag: 14.10.2019
(51) Int. Cl.: F16L 3/015, F16G 13/16, H02G 11/00

(54) **ENTKOPPLUNGSMITTEL**
DECOUPLING MEDIUM
MOYEN DE DÉSACCOUPLEMENT

(30) Priorität: 22.10.2018 DE 102018126264
(43) Veröffentlichungstag der Anmeldung: 06.05.2020
(73) Patentinhaber: Hochschule Trier, 54293 Trier (DE)
(72) Erfinder: EHLENZ, Tobias, 54612 Lasel (DE); WITTMANN, Armin, 54298 Welschbillig (DE); ROBERT, Dietmar, 54346 Mehring (DE); SAUER, Tobias, 66780 Rehlingen-Siersburg (DE)
(74) Vertreter: Müller, Jochen

(56) Entgegenhaltungen:
- DE-U1-202011 101 573

## Beschreibung

Die Erfindung bezieht sich auf einen Schleppstrang mit einem Entkopplungsmittel, wobei der Schleppstrang eine Mehrzahl aus hohlen Gliedern aufweist, die aneinandergereiht eine Schleppkette bilden, die einen internen Kanal umfasst, in dem das Entkopplungsmittel mit einer darin angeordneten Leitung zum Dämpfen und/oder Federn von Krafteinflüssen auf die Leitung innerhalb des Schleppstrangs angeordnet ist, so dass wenigstens ein Abschnitt des Entkopplungsmittels zwischen der Leitung und einer Wandung des Schleppstrangs angeordnet ist, wobei ein dämpfender und/oder federnder Teil des Entkopplungsmittels auf einer bezüglich des Kanals nach außen gerichteten Seite der Wandung angeordnet.

Die DE 20 2011 101 573 U1 offenbart einen solchen Schleppstrang.

Neueste Forschungen haben ergeben, dass eine Beschädigung von Leitungen und ein Übersprechverhalten häufig bei Geräten registriert werden, die Leitungen aufweisen, welche durch Schleppstränge wie Schleppketten oder Führungsrohre geführt sind. Insbesondere die Lebensdauer der Leitungen bei in einem Führungstisch geführten Schleppketten ist drastisch verringert, da aufgrund der Unterteilung der Schleppkette in einzelne Kettenglieder energiereiche Schläge je Kettenglied auftreten. Die einzelnen Kettenglieder einer Schleppkette schlagen bei der im Betrieb vorgesehenen Bewegung auf den darunter angeordneten Führungstisch auf und übertragen die Energie auf die innerhalb der Schleppkette befindlichen Leitungen. Das Aufschlagen der Kettenglieder erfolgt während einer Abrollbewegung der Schleppkette, die sich in einer Kippbewegung der einzelnen Glieder äußert. Dabei schlagen die Kettenglieder mit der Außenseite der Wandung auf den Führungstisch auf.

Beim Abrollen von Schleppketten wird die Energie aus den Schlägen der Kettenglieder auf die darin angeordnete Leitung übertragen. Es kann beobachtet werden, dass eine Leitung in einer Schleppkette mechanisches Rissausbreitungswachstum im Bereich der Kanten der Kettenglieder aufweist.

Ferner treten bei dynamischen Anwendungen eines Schleppstrangs mit Busverbindungen Übertragungsprobleme auf. Hierbei werden die Leitungen durch die Bewegungen des Schleppstrangs bei einer dynamischen Anwendung mechanischen Impulsen ausgesetzt, die neben den Zerstörungen der Leitung Fehlübertragungen in den Leitungen hervorrufen. Durch die Bewegungen schlagen die Wandungen der Schleppketten oder Führungsrohre auf die Leitungen auf, wodurch Drähte in Kabeln oder Litzen zueinander verschoben werden. Die Verbindungen innerhalb der Leitung rufen sowohl mechanische als auch elektromagnetische Wechselwirkungen hervor. Hierdurch kommt es zu ungewollten Signalen und einem Vermischen von Signalen aus verschiedenen Leitungen, was sich in einem elektrischen Übersprechen auszeichnet und zu Fehlern innerhalb eines Datenstroms führt. Dies ist besonders bei hohen Bitraten problematisch.

Wird beispielsweise ein Kabel, Schlauch oder ähnliches in einer Schleppkette ohne ein Dämpfungselement verbaut besitzt es in Längsrichtung weder eine vertikale noch eine horizontale Führung. Durch die Schwerkraft liegt das Kabel, der Schlauch oder ähnliches in der Schleppkette an einer dem Boden zugewandten Wandung auf. Durch eine Biegung, die durch die Bewegung der Schleppkette verursacht wird, wird das Kabel zusätzlich an die Wandung gepresst. Zwischen einem Ende der Schleppkette, das zur Bewegung angetrieben wird, und dem Übergang zu der Krümmung wird das Kabel, der Schlauch oder ähnliches durch die Gewichtskraft durchhängen. Es entsteht eine S-förmige Biegelinie. Das Kabel, der Schlauch oder ähnliches erfährt in diesem Bereich durch die Bewegung eine wechselnde Biegerichtung und daher Biegespannung. In Anbetracht einer hohen Anzahl an Zyklen entstehen dadurch hohe Wechsellasten.

Es sind auch keine Lösungen für die Probleme bei dynamischen Bewegungen der Leitungen aus dem Stand der Technik bekannt. Beispielsweise zeigt die DE 20 2006 006 492 U1 eine Schleppkette, die einen internen Kanal ausbildet, in dem eine Leitung angeordnet ist. Durch ein Biegen der Schleppkette kommt es zu den vorstehend beschriebenen Problemen aufgrund eines Kontaktes der Leitung mit der Wandung der Schleppkette innerhalb des Kanals. Erfolgt die Biegung durch eine schnelle Bewegung, dann kommt es zu starken und energiereichen Schlägen, die wiederum für die Leitungen schädliche Impulse erzeugen.

Der Erfindung liegt die Aufgabe zugrunde, eine Maßnahme bereitzustellen, um Impulse auf die Leitungen innerhalb von Schleppsträngen zu verhindern.

Erfindungsgemäß wird die Aufgabe durch die Merkmale des Anspruchs 1 gelöst.

Das Entkopplungsmittel zum Dämpfen und/oder Federn von Krafteinflüssen auf eine Leitung ist innerhalb eines Schleppstrangs angeordnet. Die Leitung ist von den Wandungen des Schleppstrangs umgeben. Das Entkopplungsmittel umgibt wenigstens eine Leitung, so dass das Entkopplungsmittel zwischen der Leitung und einer Wandung des Schleppstrangs angeordnet ist. Dadurch werden Schläge der Wandungen auf die Leitung gedämpft und somit Impulse in der Leitung bzw. den Leitungen verringert oder vermieden. Der frühzeitige Ausfall von Leitungen in Schleppsträngen wird verzögert oder vollständig verhindert. Somit werden Übertragungsprobleme, insbesondere bei Busverbindungen, vermindert oder vermieden. Ferner werden Zerstörungen an der Leitung vermieden, so dass beispielsweise durch die dynamische Anwendung bedingte Isolationsmängel der Leitung ausgeschlossen werden können. Das Entkopplungsmittel weist einen dämpfenden und/oder federnden Teil auf, der auf einer bezüglich des Kanals nach außen gerichteten Seite der Wandung angeordnet ist. Dadurch können Stöße von außen aufgenommen werden.

Das Entkopplungsmittel ist innerhalb des Schleppstrangs angeordnet. Unter dem Begriff Leitung sind im Rahmen der Erfindung auch Kabel, Schläuche, Hydraulikleitungen oder Bowdenzüge zu verstehen. Das Entkopplungsmittel schützt mindestens eine Leitung oder dämpft und/oder federt den Schleppstrang selbst.

Ferner kann das Entkopplungsmittel eine eigene Wandung aufweisen. Die Wandung des Schleppstrangs kann ebenfalls ein Entkopplungsmittel enthalten bzw. ein Entkopplungsmittel kann in die Wandung integriert sein.

Erfindungsgemäß ist das ganze Entkopplungsmittel von den Wandungen beabstandet, so dass das Entkopplungsmittel im Kanal beweglich angeordnet ist und die Energie aus den Schlägen aufnimmt. Durch ein derart bewegliches Entkopplungsmittel ist eine hohe Beweglichkeit des Schleppstrangs gewährleistet.

Darüber hinaus kann sich das Entkopplungsmittel in Längsrichtung und/oder in Querrichtung und/oder tangential und/oder radial und/oder axial der Leitung und/oder des Schleppstrangs abschnittsweise oder entlang der gesamten Leitung und/oder des Schleppstrangs erstrecken. Insbesondere kann sich das Entkopplungsmittel in alle Richtungen relativ zu der Leitung und/oder dem Schleppstrang abschnittsweise oder entlang der gesamten Leitung und/oder des Schleppstrangs erstrecken.

Nach einer vorteilhaften Weiterbildung kann vorgesehen sein, dass sich das Entkopplungsmittel in Längsrichtung und/oder Querrichtung des Schleppstrangs und/oder der Leitung abschnittsweise erstreckt. Das Entkopplungsmittel bedeckt dabei die Leitung abschnittsweise, während die übrige Leitung innerhalb des Schleppstrangs unbedeckt bleibt. Dadurch kann eine einfache und kostengünstige Dämpfung erreicht werden, die dennoch eine hohe Beweglichkeit der Leitung ermöglicht. Alternativ kann die gesamte Leitung durch das Entkopplungsmittel bedeckt werden, so dass eine maximale Dämpfung und somit Sicherheit für die Leitung erlangt wird, da jeder Abschnitt innerhalb des Schleppstrangs durch das Entkopplungsmittel bedeckt ist. Ferner kann die Leitung entlang des gesamten Schleppstrangs bedeckt sein. Es kann auch ein variierendes Entkopplungsmittel innerhalb des Schleppstrangs vorgesehen sein.

Vorteilhafterweise ist mindestens eine Leitung in das Entkopplungsmittel eingefügt. Bei der Anordnung mehrerer Leitungen können diese voneinander separiert in dem Entkopplungsmittel angeordnet sein. Das Entkopplungsmittel kann mehrere Leitungen gleichzeitig innerhalb des Schleppstrangs vorteilhaft einfach und kostengünstig dämpfen. Hierzu kann das Entkopplungsmittel einen federnden und/oder einen dämpfenden Stoff aufweisen. Besonders gute Dämpfungseigenschaften werden erreicht, wenn das Entkopplungsmittel einen gummiartigen Stoff umfasst. Ferner können zusätzlich hohle Strukturen innerhalb des Entkopplungsmittels ausgebildet werden, so dass die Steifigkeit des Entkopplungsmittels beeinflusst wird. Außerdem kann das Entkopplungsmittel Kunststoff umfassen, der beispielsweise in Form von Streben und Filmscharnieren strukturiert ist. Besonders effizient ist ein Material das dämpfende und/oder federnde Eigenschaften aufweist. Es können auch Materialien kombiniert werden, die jeweils überwiegend dämpfende oder federnde Eigenschaften aufweisen.

Vorzugsweise kann das Entkopplungsmittel sehr einfach in den Kanal eingefügt werden. Es ist beispielsweise eingeklemmt und/oder eingeklipst und/oder eingeklebt und/oder angeschweißt und/oder eingelegt und/oder geschraubt. Durch die vielfältigen Möglichkeiten, das Entkopplungsmittel mit dem Schleppstrang zu verbinden, ist eine vorteilhaft einfache Anwendung gewährleitstet. Es kann vorzugsweise ein Fügen nach DIN 8593 erfolgen.

Zweckmäßigerweise kann sich das Entkopplungsmittel von einer ersten Wandung zu einer weiteren Wandung, vorzugsweise einer gegenüberliegenden Wandung, erstrecken. Somit ist ein Entkopplungsmittel bereitgestellt, das einen großen Teil des Querschnitts des Kanals einnimmt. Hiernach wird eine sichere Beabstandung der Leitung zu den Wandungen gewährleistet. Weiter kann eine Vielzahl von Leitungen in dem Entkopplungsmittel angeordnet sein. Das Entkopplungsmittel kann sich sowohl an mindestens einer oder mehreren Wandungen abstützen als auch lose in dem Schleppstrang angeordnet sein.

Es kann vorgesehen sein, dass das Entkopplungsmittel einen Querschnitt aufweist, der komplementär zu einer Kontur eines Kanals innerhalb des Schleppstrangs ausgebildet ist. Der Querschnitt des Kanals kann durch ein derart ausgebildetes Entkopplungsmittel vollständig ausgefüllt werden, wodurch die Leitungen besonders gut geschützt sind. Das Entkopplungsmittel kann auch aus dem Kanal nach außen ragen, so dass es wenigstens teilweise auf einer Außenseite des Schleppstrangs angeordnet ist. Im Weiteren kann das Entkopplungsmittel derart ausgebildet sein, dass es sich der Kontur eines Kanals innerhalb des Schleppstrangs anpasst. Beispielsweise kann ein elastisch verformbares Schaumstoff-Material vorgesehen sein.

Das Entkopplungsmittel ist zweckmäßigerweise schlauchartig, schraubenartig und/oder spiralartig ausgeformt und die Leitung in dem Schlauch aufgenommen. Solch ein schlauchartiges Entkopplungsmittel kann sich über die gesamte Leitung erstrecken. Es können auch mehrere Schläuche verwendet werden.

Eine weitere vorteilhafte Alternative kann einen schnurartigen und/oder kettenartigen Längskörper als Entkopplungsmittel aufweisen, der in wenigstens einer Wandung eingehängt ist. Das Entkopplungsmittel stellt eine Aufhängung für die Leitung innerhalb des Kanals dar. Diese Ausführung ist besonders flexibel hinsichtlich der Anzahl der Leitungen und der Kontur des Kanals. Der schnurartige Längskörper kann eine Schnur oder ein Gummiband sein.

Dabei kann sich der schnurartige Längskörper innerhalb des Kanals kreuzen. Bei einem eckigen Querschnitt des Kanals kann der Längskörper diagonal verlaufen. Eine Leitung kann zwischen vier Kreuzungen des schnurartigen Längskörpers im Entkopplungsmittel positioniert werden. Die Leitung wird durch die Kreuzungen von den Wandungen beabstandet. Ferner sind die Kreuzungen von den Wandungen beabstandet.

Bei allen Ausführungsformen kann wenigstens eine Leitung mittig bezüglich des Querschnitts des Entkopplungsmittels positioniert werden, so dass die Leitung sicher von den Wandungen des Schleppstrangs beabstandet ist. Ferner kann die Leitung und/oder die Schleppkette oder Teile der Schleppkette innerhalb des Querschnitts des Entkopplungsmittels positioniert sein.

Insbesondere kann ein Schleppstrang mit einem Entkopplungsmittel vorgesehen sein, der eine Mehrzahl aus hohlen Gliedern aufweist, die aneinandergereiht eine Schleppkette bilden. Die Schleppkette weist einen internen Kanal auf, indem das Entkopplungsmittel mit einer darin angeordneten Leitung angeordnet ist.

Vorteilhafterweise ist das Entkopplungsmittel im Bereich einer Kante eines Glieds des Schleppstrangs angeordnet. Dadurch werden die Schläge mit besonders hoher Energie auf die Leitung durch die Kante gedämpft.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörigen Zeichnungen näher erläutert.

Es zeigt:
- Fig. 1A: eine Seitenansicht eines nicht von den Ansprüchen umfassten blockartigen Entkopplungsmittels in einer Schleppkette mit einer Leitung,
- Fig. 1B: eine Vorderansicht des nicht von den Ansprüchen umfassten blockartigen Entkopplungsmittels mit einer Leitung,
- Fig. 2: eine perspektivische Ansicht einer nicht von den Ansprüchen umfassten Schleppkette mit einem blockartigen Entkopplungsmittel mit drei Leitungen,
- Fig. 3A: eine Seitenansicht eines nicht von den Ansprüchen umfassten schlauchartigen Entkopplungsmittels in einer Schleppkette mit einer Leitung,
- Fig. 3B: eine Vorderansicht des nicht von den Ansprüchen umfassten schlauchartigen Entkopplungsmittels mit einer Leitung,
- Fig. 4: eine perspektivische Ansicht einer nicht von den Ansprüchen umfassten Schleppkette mit einem schlauchartigen Entkopplungsmittel mit einer Leitung,
- Fig. 5A: eine Seitenansicht eines nicht von den Ansprüchen umfassten schnurartigen Entkopplungsmittels mit einer Leitung, welches in einer Schleppkette eingehängt ist,
- Fig. 5B: eine Vorderansicht des nicht von den Ansprüchen umfassten schnurartigen Entkopplungsmittels mit einer Leitung,
- Fig. 6: eine perspektivische Ansicht einer nicht von den Ansprüchen umfassten Schleppkette mit einem schlauchartigen Entkopplungsmittel mit einer Leitung,
- Fig. 7: Kraftdiagramme mit Kraftspitzen beim Aufschlag eines Schleppkettenglieds ohne Entkopplungsmittel (links) im Vergleich zu einem Schleppkettenglied mit Entkopplungsmittel und verringerten Kraftspitzen (rechts), und
- Fig. 8: ein Entkopplungsmittel mit nicht öffenbaren Aufnahmen,
- Fig. 9: ein öffenbares Entkopplungsmittel,
- Fig. 10 bis 12: unterschiedliche Entkopplungsmittel mit jeweils einer Öffnung, in der ein lösbares Element des Schleppstrangs form-, kraft-, oder stoffschlüssig angeordnet werden kann und
- Fig. 13: eine Darstellung eines nicht von den Ansprüchen umfassten Entkopplungsmittels.

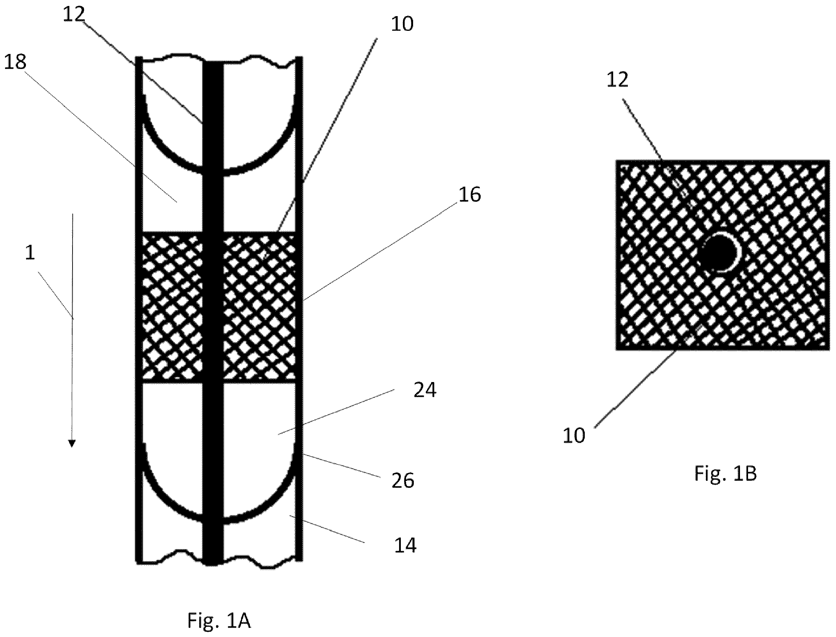

Fig. 1A offenbart ein Entkopplungsmittel 10, durch das eine Leitung 12 hindurchgeführt wird. Das Entkopplungsmittel 10 ist innerhalb eines Schleppstrangs 14, der als Schleppkette ausgebildet ist, angeordnet.

Der Schleppstrang 14 ist aus zueinander beweglichen Gliedern 24 aufgebaut, die aneinandergereiht sind. Die Glieder 24 weisen Wandungen 16 auf, die einen Kanal 18 innerhalb der Glieder 24 beziehungsweise des Schleppstrangs 14 von der Umgebung nach außen abgrenzen. Die Wandungen 16 bilden also den Kanal 18, in dem das Entkopplungsmittel 10 und die Leitung 12 angeordnet sind. Dabei kann der Kanal 18 einen eckigen Querschnitt aufweisen, der insbesondere rechteckig ausgebildet ist. Kanalabschnitte der einzelnen Glieder 24 ergeben einen durch den Schleppstrang 14 hindurchreichenden Kanal 18, durch den die Leitung 12 geführt ist.

Das Entkopplungsmittel 10 ist ungefähr mittig bezüglich der Längsrichtung 1 innerhalb eines Kanalabschnitts eines Glieds 24 positioniert. Dabei ist das Entkopplungsmittel 10 lediglich entlang eines Teilabschnitts des Kanals 18, beziehungsweise der Leitungen 12, angeordnet. Das Entkopplungsmittel 10 kann bezüglich der Längsrichtung 1 von Kanten 26 an den Längsenden der Glieder 24 beabstandet sein. Alternativ oder ergänzend kann das Entkopplungsmittel 10 im Bereich dieser Kanten 26 ausgebildet sein.

Das Entkopplungsmittel 10 kann einen Kunststoff, einen Gummi, einen Korkstoff, einen watteartigen Stoff und/oder Latex umfassen. Ferner können in dem Entkopplungsmittel 10 Hohlräume, Schlitze und/oder Löcher ausgebildet sein, so dass Steifigkeitseigenschaften des Entkopplungsmittels 10 beeinflusst werden.

Fig. 1B zeigt einen Querschnitt durch das Entkopplungsmittel 10 mit einer Leitung 12. Das Entkopplungsmittel 10 weist einen rechteckigen Querschnitt auf, der in seinem Zentrum eine Öffnung aufweist, in der die Leitung 12 angeordnet ist. Somit ist die Leitung 12 gegenüber allen die Kontur des Kanals 18 bildenden Wandungen 16 beabstandet. Ferner kann der Abstand von jeweils zwei sich gegenüberliegenden Wandungen 16 gleich groß sein. Das Entkopplungsmittel 10 erstreckt sich zwischen zwei gegenüberliegenden Wandungen 16 und weist einen zum Querschnitt des Kanals 18 komplementären Querschnitt auf.

Das Entkopplungsmittel 10 kann in den Kanal 18 eingeschweißt, eingeklebt, eingeklipst, eingelegt, eingeklemmt und/oder angeschraubt werden. Weitere Fügetechniken sind denkbar und keinesfalls ausgeschlossen.

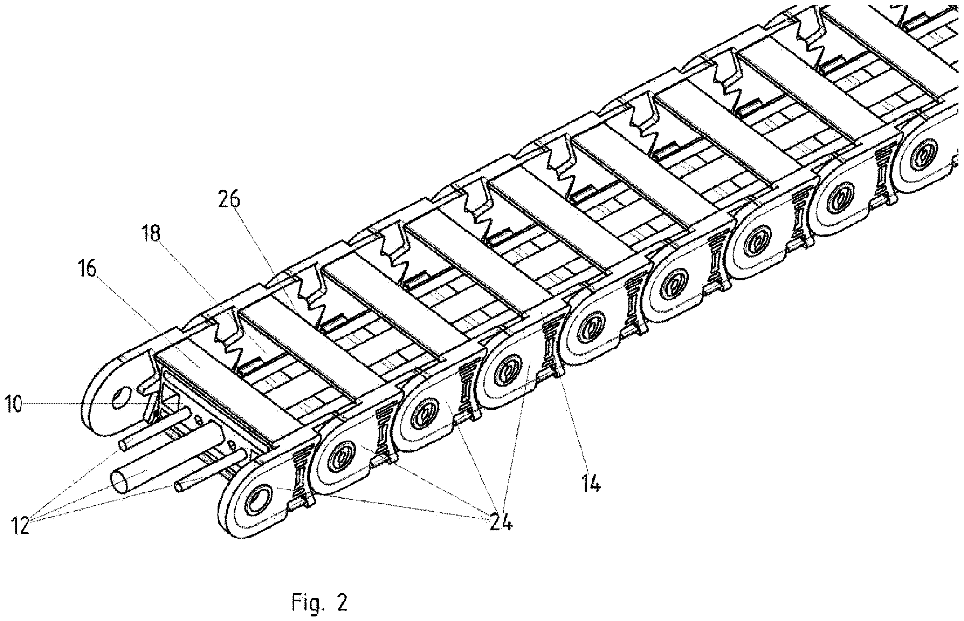

Fig. 2 zeigt eine perspektivische Ansicht der Schleppkette 14, die aus einer Mehrzahl aneinandergereihter Glieder 24 aufgebaut ist. Die Wandungen 16 der einzelnen Glieder 24 sind zu Wandungen 16 benachbarter Glieder 24 beabstandet, dadurch bilden sich Aussparungen zwischen den benachbarten Wandungen 16, die von Kanten 26 in Längsrichtung 1 begrenzt sind. Unterhalb der Wandungen 16 sind in dem Kanal 18 Entkopplungsmittel 10 angeordnet. In dem Kanal 18 sind beispielhaft drei Leitungen 12 entlanggeführt und durch die Entkopplungsmittel 10 hindurchgesteckt. Dabei weist jedes Glied 24 ein Entkopplungsmittel 10 auf.

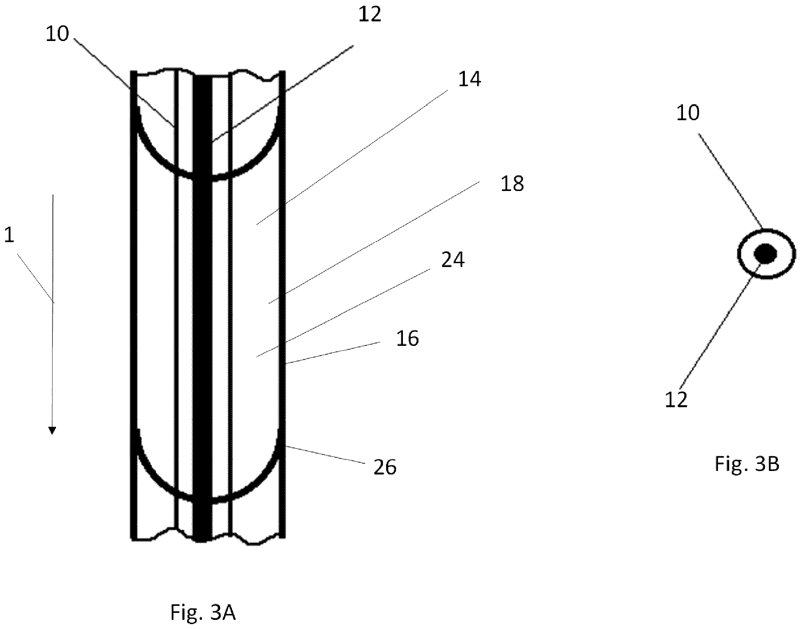

In Fig. 3A ist eine alternative Ausführungsform des Entkopplungsmittels 10 gezeigt, das in einem Schleppstrang 14 angeordnet ist. Dieses Entkopplungsmittel 10 ist schlauchartig ausgebildet und erstreckt sich über die gesamte Länge in Längsrichtung 1 der Leitung 12 beziehungsweise des Kanals 18. Dabei umgibt das schlauchartige Entkopplungsmittel 10 die Leitung 12 derart, dass es gegenüber den Wandungen 16 zwischen der Leitung 12 und den Wandungen 16 angeordnet ist. Zudem ist das Entkopplungsmittel 10 von den Wandungen 16 beabstandet, so dass ein Freiraum zwischen dem Entkopplungsmittel 10 und den Wandungen 16 vorliegt. Das Entkopplungsmittel 10 ist innerhalb des Kanals 18 beweglich und kann flexibel gebogen werden. Bei Bewegungen des Schleppstrangs 14, die sich durch eine Biegung entlang der Längsrichtung 1, erzeugt durch eine Verkippung der Glieder 24 zueinander, auszeichnet, kann sich das alternative Entkopplungsmittel 10 mitbewegen. Das Entkopplungsmittel 10 kann aus einem Gummi, Latex oder einem weiteren Kunststoff bestehen. Ferner kann das Entkopplungsmittel 10 aus einem Rippenschlauch aufgebaut sein. Das Material des Entkopplungsmittels 10 kann durch ein Gewebe verstärkt sein.

Ein Querschnitt ist in Fig. 3B gezeigt, wobei das Entkopplungsmittel 10 eine kreisförmige Kontur aufweist, in der konzentrisch die Leitung 12 angeordnet ist.

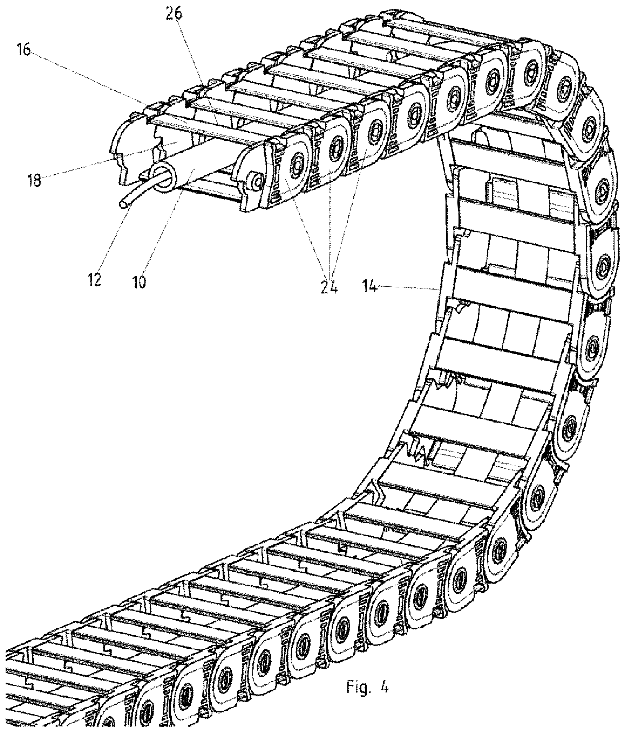

Fig. 4 zeigt eine perspektivische Ansicht eines Schleppstrangs 14 mit einem schlauchartigen Entkopplungsmittel 10, wobei der Schleppstrang 14 eine Biegung aufweist. Das schlauchartige Entkopplungsmittel 10 ist innerhalb des Kanals 18 angeordnet und entsprechend der Biegung des Schleppstrangs 14 gebogen.

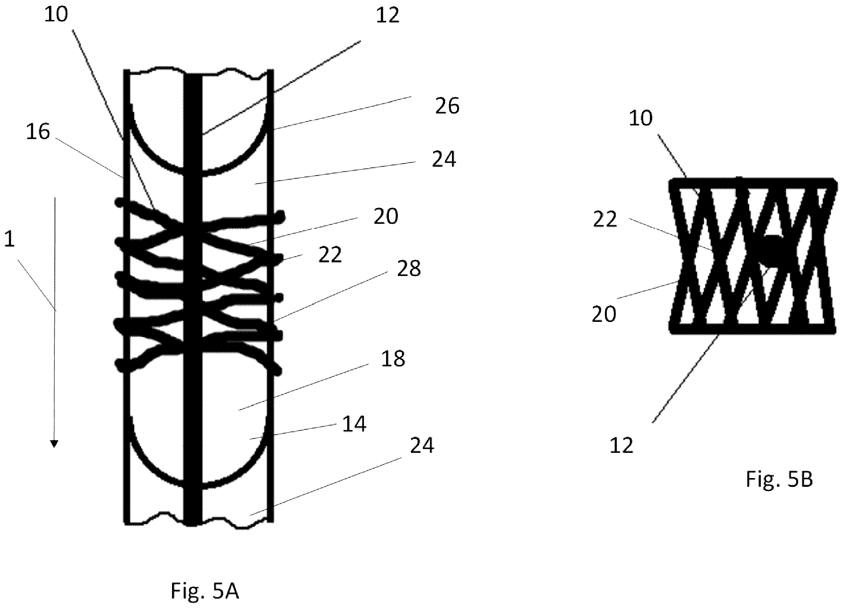

Eine weitere Alternative des Entkopplungsmittels 10 ist in Fig. 5A dargestellt. Das Entkopplungsmittel 10 ist aus einem schnurartigen Längskörper 20 gebildet, der in Aufhängungen 28 in der Wandung 16 des Schleppstrangs 14 eingehängt ist. Dabei erstreckt sich das schnurartige Entkopplungsmittel 10 zwischen zwei gegenüberliegenden Wandungen 16, wobei sich das schnurartige Entkopplungsmittel 10 innerhalb des Kanals 18 kreuzt. Die dadurch entstehenden Kreuzungen 22 bilden Auflagen für die Leitung 12. Das schnurartige Entkopplungsmittel 10 kann geflecht- oder gewebsartig durch eine Schnur oder ein Gummiband zwischen den gegenüberliegenden Wandungen 16 hin und her geführt werden. Alternativ kann das schnurartige Entkopplungsmittel 10 in einem Rahmen positioniert bzw. aufgespannt und der Rahmen mit dem Entkopplungsmittel 10 in den Kanal 18 eingesetzt werden.

Fig. 5B zeigt eine Vorderansicht des schnurartigen Entkopplungsmittels 10, wobei die Leitung 12 zwischen vier Kreuzungen 22 angeordnet ist. Ferner kann die Leitung 12 zwischen zwei benachbarten Kreuzungen 22 und zwei gegenüberliegenden Aufhängungspunkten positioniert sein.

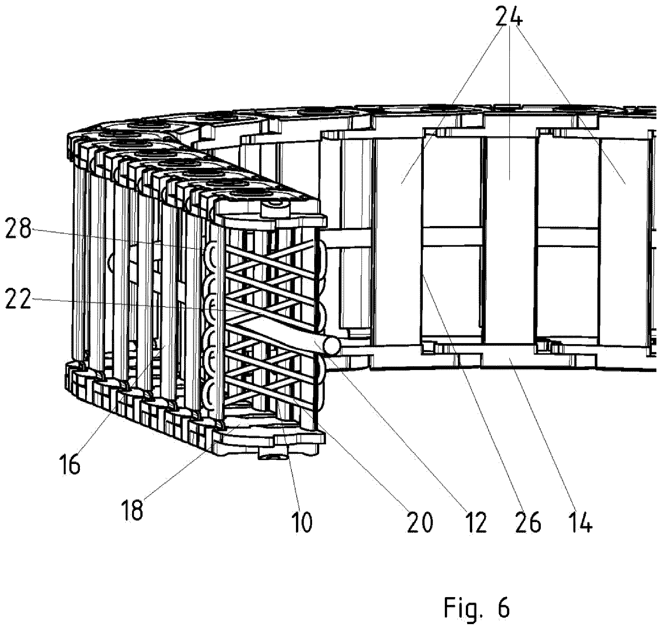

Fig. 6 zeigt ein perspektivisches Abbild des Schleppstrangs 14 mit einem schnurartigen Entkopplungsmittel 10. Dabei ist die Leitung 12 ungefähr mittig in dem Kanal 18 durch die Kreuzungen 22 des Entkopplungsmittels 10 positioniert. Der schnurartige Längskörper 20 ist mittels Schlaufen an die Aufhängungen 28 gehängt.

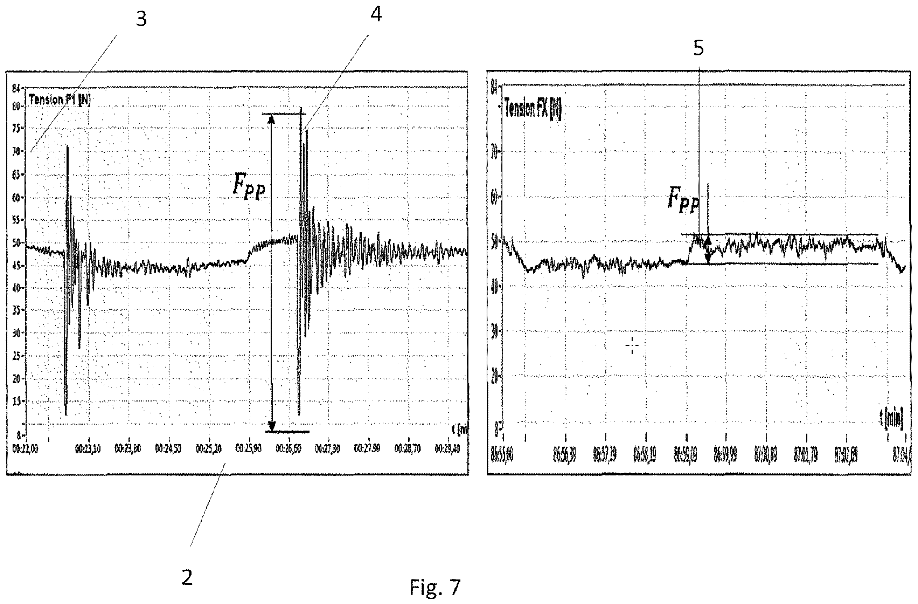

Gemäß Fig. 7 ist im linken Diagramm ein Kraftverlauf über eine Zeitachse 2 dargestellt, wie er durch Schläge der Wandungen 16 auf eine ungedämpfte Leitung 12 hervorgerufen wird. Insbesondere rufen die Schläge besonders hohe Kraftspitzen 4 hervor, die bis zu 80 N von Spitze zu Spitze entlang der Kraftachse 3 betragen können. Im rechten Diagramm ist der Kraftverlauf einer mittels eines erfindungsgemäßen Entkopplungsmittels 10 gedämpften Leitung 12 dargestellt. Die gedämpften Kraftspitzen 5 sind auf 5 N durch das Entkopplungsmittel 10 reduziert. Somit kann ein schädlicher Einfluss der Bewegungen und der dadurch erzeugten Impulse auf die Leitungen 12 verringert beziehungsweise vollständig vermieden werden.

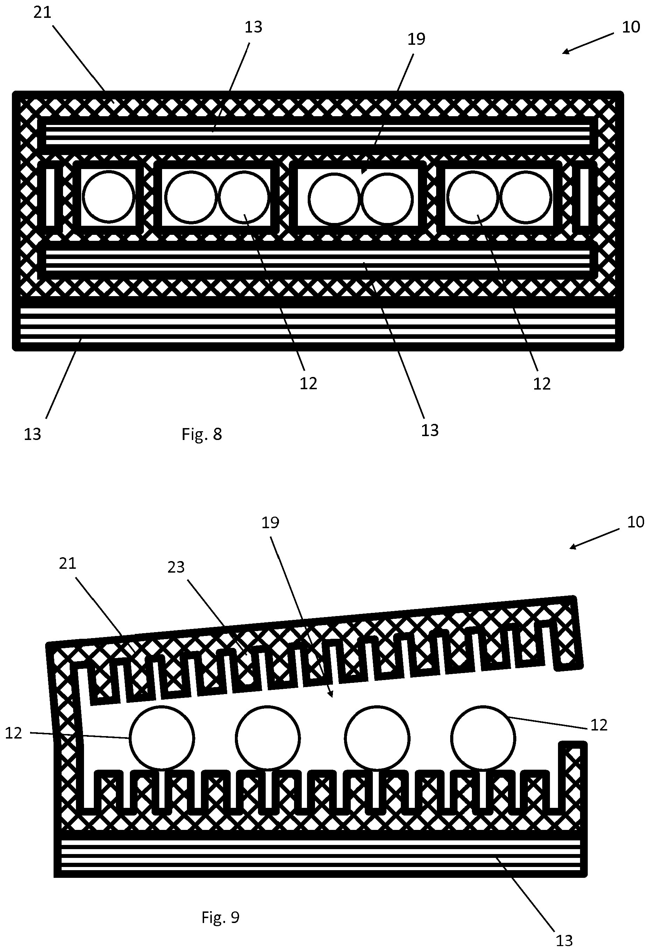

Figur 8 zeigt eine Ausführungsform des Entkopplungsmittels 10, bei dem im Inneren mehrere Aufnahmen 19 für Leitungen 12 ausgebildet sind. Das Entkopplungsmittel 10 ist durch einen Rahmen 21 gebildet, der die Aufnahmen 19 umfasst. Es können beispielsweise vier Aufnahmen 19 ausgebildet sein. Die Anzahl der Aufnahmen 19 ist im Wesentlichen abhängig von der Bemessung des Schleppstrangs 14 und der Art der eingebauten Leitungen 12. Der Querschnitt des Entkopplungsmittels 10 ist in etwa rechteckig. Auf einer Außenseite ist ein Feder-Dämpfelement 13 vorhanden. Das Feder-Dämpfelement 13 ist vorteilhafterweise auf einer Längsseite angebracht. Der Rahmen 21 kann aus Kunststoff gebildet sein, während das Feder-Dämpfelement 13 aus einem gummiartigen Material gefertigt werden kann. Ferner sind Feder-Dämpfelemente 13 in dem Entkopplungsmittel 10 eingefügt, wobei wenigstens eines beispielweise zwischen der Aufnahme 19 und dem äu-βeren Feder-Dämpfelement 13 angeordnet sein kann. Ein weiteres Feder-Dämpfelement 13 kann auf einer gegenüberliegenden Seite der Aufnahmen 19 angeordnet werden und ebenfalls von der Außenseite des Entkopplungsmittels 10 beabstandet sein.

Ein alternatives Entkopplungsmittel 10 ist in Figur 9 gezeigt. Es kann geöffnet werden, so dass die Aufnahme 19 offensteht. In die geöffnete Aufnahme 19 kann die Leitung 12 eingelegt werden. In der Aufnahme 19 sind nach innen gerichtete Lamellen 23 angeordnet. Auf einer Außenseite ist ein Feder-Dämpfelement 13 entlang der Längsseite angeordnet. Das Entkopplungsmittel 10 kann mittels eines nicht dargestellten Rastmittels verschlossen werden.

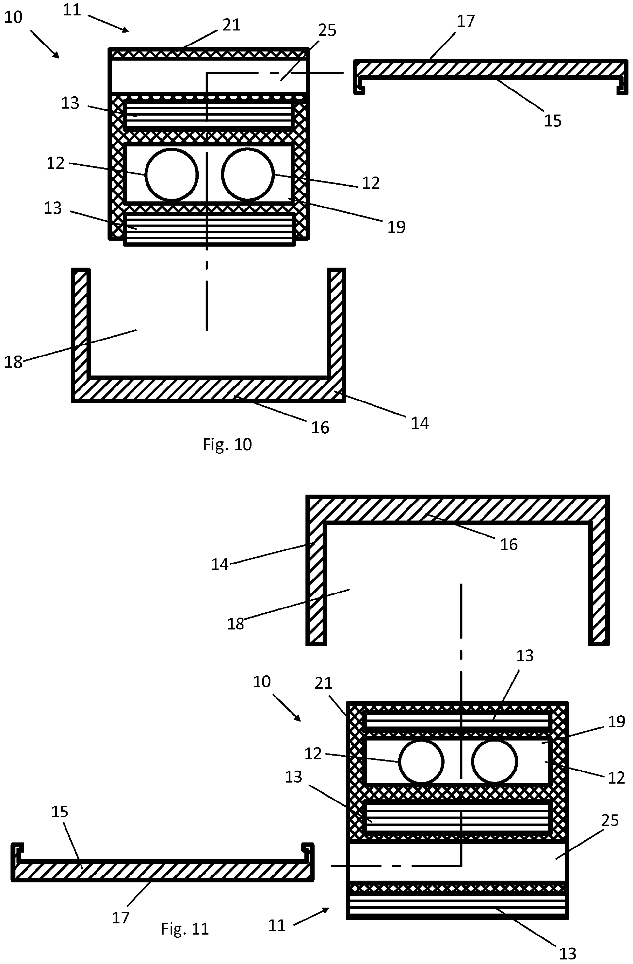

Figur 10 zeigt das Entkopplungsmittel 10, das mittels eines lösbaren Elements 15 in dem Schleppstrang 14 fixiert werden kann. Dabei wird das Entkopplungsmittel 10 in den Kanal 18 entlang der gedachten strichpunktierten Linie eingelegt und das lösbare Element 15 wird durch eine Öffnung 25 im Entkopplungsmittel 10 hindurchgesteckt und mit dem restlichen Schleppstrang 14 verrastet. Die Öffnung 25 erstreckt sich vorzugsweise in durchgehender Weise durch das Entkopplungsmittel 10 hindurch und ist an einem äußeren Bereich des Entkopplungsmittels 10 vorhanden. Das lösbare Element 15 stellt eine Wandung des Schleppstrangs 14 dar, dessen Außenseite 17 innerhalb des Entkopplungsmittels 10 angeordnet ist. Ein Teil des Entkopplungsmittels 10 ist außerhalb des Schleppstrangs 14 angeordnet. Das auf der Außenseite des Entkopplungsmittels 10 angeordnete Feder-Dämpfelement 13 liegt nach dem Anordnen auf einer Innenseite des Kanals 18 auf. Ein weiteres Feder-Dämpfelement 13 ist zwischen der Öffnung 25 und der Aufnahme 19 angeordnet. Die Aufnahme 19 ist zwischen zwei Feder-Dämpfelementen 13 vorhanden, wobei die beiden Feder-Dämpfelemente 13 und die Aufnahme 19 innerhalb des Kanals 18 angeordnet sind. Die Anzahl der verwendeten Feder-Dämpfelemente 13 kann auch größer als zwei sein.

Figur 11 zeigt eine Explosionszeichnung einer weiteren Ausführungsform des Entkopplungsmittels 10, bei der die innerhalb des Kanals 18 angeordneten Feder-Dämpfelemente 13 vom Rahmen 21 umschlossen sind. Die Feder-Dämpfelemente 13 können alternativ zur Aufnahme 19 hin offenliegen. Dies kann bei allen Ausführungsformen umgesetzt sein. Ein drittes Feder-Dämpfelement 13 ist außerhalb des Kanals 18 auf der Außenseite 17 des lösbaren Elements 15 angeordnet.

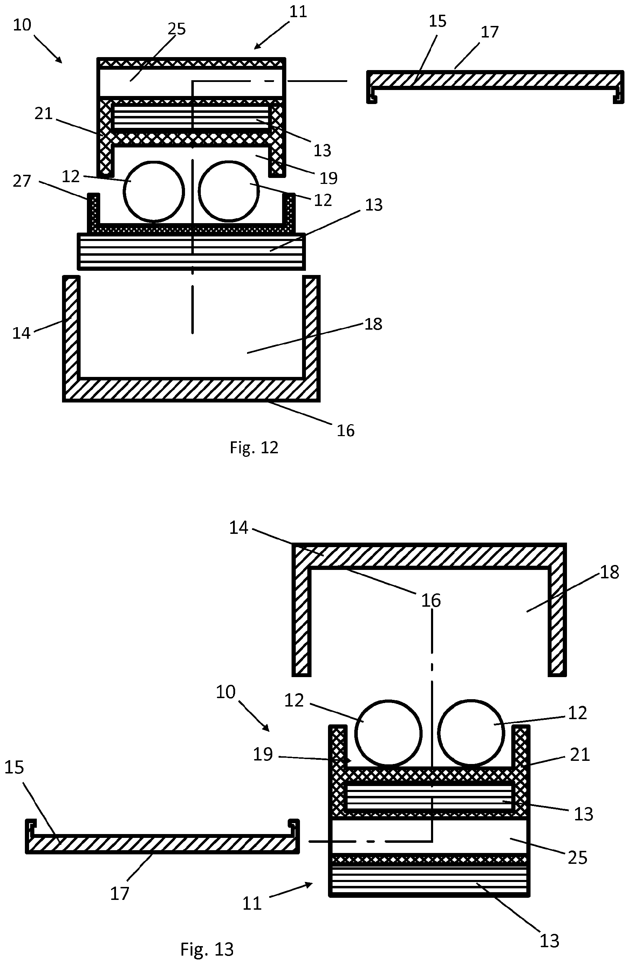

Figur 12 zeigt ein weiteres Beispiel einer Ausführung, bei der das Entkopplungsmittel 10 zweigeteilt ist. Ein erster Teil weist ein Aufnahmeteil 27 auf, auf dessen äußeren Seite ein Feder-Dämpfelement 13 angeordnet ist. Das Aufnahmeteil 27 ist U-förmig und ein zweiter Teil, der den Rahmen 21 umfasst, hat eine U-förmige Ausformung, die in das Aufnahmeteil 27 einsetzbar ist, so dass eine Aufnahme 19 bereitgestellt ist. In dem zweiten Teil ist die Öffnung 25, in die das lösbare Element 15 eingesetzt werden kann, ausgebildet und das Feder-Dämpfelement 13 eingeschlossen.

In Figur 13 ist ein weiteres Entkopplungselement 10 abgebildet, das eine U-förmige Aufnahme 19 aufweist, die in den Kanal 18 eingesetzt wird. Der Schleppstrang 14 verschließt die U-förmige Aufnahme 19. Das Entkopplungselement 10 wird durch ein lösbares Element 15, das in der Öffnung 25 angeordnet ist, fixiert. Das Feder-Dämpfelement 13 ist auf der Außenseite 17 des lösbaren Elements 15 positioniert.

Nach den Fig. 10 bis 13 kann das Element 15 im formschlüssigen Sinn in die Öffnung 25 eingeschoben sein. Die Geometrie der Öffnung 25 kann beispielsweise auch konisch gestaltet sein, so dass ein Kraftschluss durch Reibung entsteht. Alternativ kann das Element 15 auch in der Öffnung 25 verklebt sein, so dass eine stoffschlüssige Verbindung vorhanden ist.

### Bezugszeichen

- 1: Längsrichtung
- 2: Zeitachse
- 3: Kraftachse
- 4: ungedämpfte Kraftspitze
- 5: gedämpfte Kraftspitze
- 10: Entkopplungsmittel
- 11: Teil von 10
- 12: Leitung
- 13: Feder-Dämpfelement
- 14: Schleppstrang
- 15: Element
- 16: Wandung
- 17: Außenseite
- 18: Kanal
- 19: Aufnahme
- 20: Längskörper
- 21: Rahmen
- 22: Kreuzung
- 23: Lamelle
- 24: Glied
- 25: Öffnung
- 26: Kante
- 27: Aufnahmeteil
- 28: Aufhängung

## Patentansprüche

1. Schleppstrang (14) mit einem Entkopplungsmittel (10), wobei der Schleppstrang (14) eine Mehrzahl aus hohlen Gliedern (24) aufweist, die aneinandergereiht eine Schleppkette bilden, die einen internen Kanal (18) umfasst, in dem das Entkopplungsmittel (10) mit einer darin angeordneten Leitung (12) zum Dämpfen und/oder Federn von Krafteinflüssen auf die Leitung (12) innerhalb des Schleppstrangs (14) angeordnet ist, so dass wenigstens ein Abschnitt des Entkopplungsmittels (10) zwischen der Leitung (12) und einer Wandung (16) des Schleppstrangs (14) angeordnet ist, wobei ein dämpfender und/oder federnder Teil (11) des Entkopplungsmittels (10) auf einer bezüglich des Kanals (18) nach außen gerichteten Seite (17) der Wandung (16) angeordnet ist, **dadurch gekennzeichnet, dass** das Entkopplungsmittel (10) wenigstens die Leitung (12) so umgibt, dass die Leitung (12) gegenüber allen die Kontur des Kanals (18) bildenden Wandungen (16) beabstandet ist.

2. Schleppstrang (14) nach Anspruch 1, **dadurch gekennzeichnet, dass** sich das Entkopplungsmittel (10) in alle Richtungen relativ zu der Leitung (12) und/oder dem Schleppstrang (14) abschnittsweise oder entlang der gesamten Leitung (12) und/oder des Schleppstrangs (14) erstreckt.

3. Schleppstrang (14) nach Anspruch 1 oder 2, **dadurch gekennzeichnet, dass** mindestens eine Leitung (12) durch die physikalische Eigenschaft des Entkopplungsmittels (10) gedämpft und/oder gefedert ist.

4. Schleppstrang (14) nach einem der vorhergehenden Ansprüche, **dadurch gekennzeichnet, dass** das Entkopplungsmittel (10) in den Kanal (18) eingefügt ist, wobei es eingeklemmt, eingeklipst, eingeklebt, angeschweißt, eingelegt oder geschraubt ist, wobei die Fügeverfahren miteinander kombinierbar sind.

5. Schleppstrang (14) nach einem der vorhergehenden Ansprüche, **dadurch gekennzeichnet, dass** sich das Entkopplungsmittel (10) von einer ersten Wandung zu einer weiteren Wandung erstreckt.

6. Schleppstrang (14) nach einem der vorhergehenden Ansprüche, **dadurch gekennzeichnet, dass** das Entkopplungsmittel (10) einen Querschnitt aufweist, der komplementär zu einer Kontur eines Kanals (18) innerhalb des Schleppstrangs ausgebildet ist, oder derart ausgebildet ist, dass es sich der Kontur des Kanals (18) anpasst.

7. Schleppstrang (14) nach einem der Ansprüche 1 bis 4 oder 6, **dadurch gekennzeichnet, dass** das Entkopplungsmittel (10) schlauchartig und/oder schraubenförmig und/oder spiralförmig ausgeformt ist, und die Leitung (12) in einen Schlauch eingefügt ist.

8. Schleppstrang (14) nach einem der Ansprüche 1 bis 6, **dadurch gekennzeichnet, dass** das Entkopplungsmittel (10) einen schnurartigen oder kettenartigen Längskörper (20) aufweist, der in wenigstens einer Wandung (16) eingehängt ist.

9. Schleppstrang (14) nach Anspruch 8, **dadurch gekennzeichnet, dass** sich der Längskörper (20) innerhalb des Kanals (18) kreuzt und die Leitung (12) insbesondere zwischen vier Kreuzungen (22) im Entkopplungsmittel (10) positioniert ist.

10. Schleppstrang (14) nach einem der vorhergehenden Ansprüche, **dadurch gekennzeichnet, dass** ein von dem Schleppstrang (14) lösbares Element (15) zum Befestigen des Entkopplungsmittels (10) vorgesehen ist.

11. Entkopplungsmittel nach einem der vorhergehenden Ansprüche, **dadurch gekennzeichnet, dass** die Leitung (12) mittig bezüglich des Querschnitts des Entkopplungsmittels (10) positioniert ist.

12. Entkopplungsmittel nach einem der vorhergehenden Ansprüche, **dadurch gekennzeichnet, dass** das Entkopplungsmittel (10) durch einen Rahmen (21) gebildet ist, der mindestens eine Aufnahme (19) umfasst.

13. Schleppstrang (14) nach einem der vorhergehenden Ansprüche, **dadurch gekennzeichnet, dass** das Entkopplungsmittel (10) im Bereich einer quer zur Längsrichtung (1) des Schleppstrangs (14) verlaufenden Kante (26) eines Glieds (24) angeordnet ist.

## Claims

1. Drag strand (14) comprising a decoupling means (10), the drag strand (14) having a plurality of hollow links (24) which form a lined-up drag chain that comprises an internal channel (18) in which the decoupling means (10) is arranged with a line (12) arranged therein for damping and/or springing force flows onto the line (12) within the drag strand (14), so that at least one portion of the decoupling means (10) is arranged between the line (12) and a wall (16) of the drag strand (14), a damping and/or resilient part (11) of the decoupling means (10) being arranged on a side (17) of the wall (16) which is directed outward with respect to the channel (18), **characterized in that** the decoupling means (10) surrounds at least the line (12) such that the line (12) is spaced apart from all walls (16) forming the contour of the channel (18).

2. Drag strand (14) according to claim 1, **characterized in that** the decoupling means (10) extends in all directions relative to the line (12) and/or the drag strand (14) in portions or along the entire line (12) and/or the drag strand (14).

3. Drag strand (14) according to either claim 1 or claim 2,
**characterized in that** at least one line (12) is damped and/or spring-loaded by the physical property of the decoupling means (10).

4. Drag strand (14) according to any of the preceding claims,
**characterized in that** the decoupling means (10) is inserted into the channel (18), it being clamped, clipped, glued, welded, inserted or screwed, it being possible for the joining methods to be combined with one another.

5. Drag strand (14) according to any of the preceding claims, **characterized in that** the decoupling means (10) extends from a first wall to a further wall.

6. Drag strand (14) according to any of the preceding claims, **characterized in that** the decoupling means (10) has a cross section which is designed to be complementary to a contour of a channel (18) within the drag strand, or is designed such that it adapts to the contour of the channel (18).

7. Drag strand (14) according to any of claims 1 to 4 or 6,
**characterized in that** the decoupling means (10) is tubular and/or helical and/or spiral, and the line (12) is inserted into a tube.

8. Drag strand (14) according to any of claims 1 to 6, **characterized in that** the decoupling means (10) has a string-like or chain-like longitudinal body (20) which is suspended in at least one wall (16).

9. Drag strand (14) according to claim 8, **characterized in that** the longitudinal body (20) intersects within the channel (18) and the line (12) is positioned in particular between four intersections (22) in the decoupling means (10).

10. Drag strand (14) according to any of the preceding claims,
**characterized in that** an element (15) which can be detached from the drag strand (14) is provided for fastening the decoupling means (10).

11. Drag strand (14) according to any of the preceding claims,
**characterized in that** the line (12) is positioned centrally with respect to the cross section of the decoupling means (10).

12. Drag strand (14) according to any of the preceding claims,
**characterized in that** the decoupling means (10) is formed by a frame (21) comprising at least one receptacle (19).

13. Drag strand (14) according to any of the preceding claims,
**characterized in that** the decoupling means (10) is arranged in the region of an edge (26) of a link (24), which edge extends transversely to the longitudinal direction (1) of the drag strand (14).

## Revendications

1. Barre de remorquage (14) comportant un moyen de désaccouplement (10), dans laquelle la barre de remorquage (14) présente une pluralité de maillons creux (24) qui, alignés les uns à la suite des autres, forment une chaîne de remorquage, laquelle comprend un canal (18) interne dans lequel le moyen de désaccouplement (10) est disposé avec une conduite (12) disposée dans celui-ci pour l'amortissement et/ou l'atténuation de manière élastique de forces exercées sur la conduite (12) à l'intérieur de la barre de remorquage (14), de sorte qu'au moins une section du moyen de désaccouplement (10) est disposée entre la conduite (12) et une paroi (16) de la barre de remorquage (14),
dans laquelle une partie (11) d'amortissement et/ou d'atténuation de manière élastique du moyen de désaccouplement (10) est disposée sur un côté (17) de la paroi (16) orienté vers l'extérieur par rapport au canal (18), **caractérisée en ce que** le moyen de désaccouplement (10) entoure au moins la conduite (12) de sorte que la conduite (12) est espacée de toutes les parois (16) formant le contour du canal (18).

2. Barre de remorquage (14) selon la revendication 1,
**caractérisée en ce que** le moyen de désaccouplement (10) s'étend dans toutes les directions par rapport à la conduite (12) et/ou à la barre de remorquage (14), dans certaines sections ou le long de toute la conduite (12) et/ou de la barre de remorquage (14).

3. Barre de remorquage (14) selon la revendication 1 ou 2,
**caractérisée en ce qu'**au moins une conduite (12) est amortie et/ou atténuée de manière élastique par la propriété physique du moyen de désaccouplement (10).

4. Barre de remorquage (14) selon l'une des revendications précédentes, **caractérisée en ce que** le moyen de désaccouplement (10) est introduit dans le canal (18), dans laquelle ledit moyen de désaccouplement est serré, clipsé, collé, soudé, inséré ou vissé, dans laquelle les procédés d'assemblage peuvent être combinés les uns avec les autres.

5. Barre de remorquage (14) selon l'une des revendications précédentes, **caractérisée en ce que** le moyen de désaccouplement (10) s'étend d'une première paroi à une autre paroi.

6. Barre de remorquage (14) selon l'une des revendications précédentes, **caractérisée en ce que** le moyen de désaccouplement (10) présente une section transversale réalisée de manière complémentaire à un contour d'un canal (18) à l'intérieur de la barre de remorquage, ou est réalisé de telle sorte qu'il s'adapte au contour du canal (18).

7. Barre de remorquage (14) selon l'une des revendications 1 à 4 ou 6, **caractérisée en ce que** le moyen de désaccouplement (10) est formé à la manière d'un tuyau et/ou d'une hélice et/ou d'une spirale et la conduite (12) est introduite dans un tuyau.

8. Barre de remorquage (14) selon l'une des revendications 1 à 6, **caractérisée en ce que** le moyen de désaccouplement (10) présente un corps longitudinal (20) en forme de cordon ou en forme de chaîne qui est accroché dans au moins une paroi (16).

9. Barre de remorquage (14) selon la revendication 8,
**caractérisée en ce que** le corps longitudinal (20) se croise à l'intérieur du canal (18) et la conduite (12) est positionnée en particulier entre quatre croisements (22) dans le moyen de désaccouplement (10).

10. Barre de remorquage (14) selon l'une des revendications précédentes, **caractérisée en ce qu'**un élément (15) pouvant être détaché de la barre de remorquage (14) est prévu pour la fixation du moyen de désaccouplement (10).

11. Barre de remorquage (14) selon l'une des revendications précédentes, **caractérisée en ce que** la conduite (12) est positionnée au centre par rapport à la section transversale du moyen de désaccouplement (10).

12. Barre de remorquage (14) selon l'une des revendications précédentes, **caractérisée en ce que** le moyen de désaccouplement (10) est constitué d'un cadre (21) qui comprend au moins un logement (19).

13. Barre de remorquage (14) selon l'une des revendications précédentes, **caractérisée en ce que** le moyen de désaccouplement (10) est disposé dans la zone d'une arête (26) d'un maillon (24), laquelle s'étend transversalement à la direction longitudinale (1) de la barre de remorquage (14).
